# EUROPEAN PATENT SPECIFICATION

(11) **EP 0 414 452 B1**
(45) Date of publication and mention of the grant of the patent: **19.07.1995**
(21) Application number: 90309055.3
(22) Date of filing: 17.08.1990
(51) Int. Cl.: G06K 7/10

(54) **Hand-held bar code reader**
Handführbarer Strichcodeleser
Lecteur de code-barre portatif

(30) Priority: 21.08.1989 US 396504
(43) Date of publication of application: 27.02.1991
(73) Proprietor: AT&T GLOBAL INFORMATION SOLUTIONS INTERNATIONAL INC., Dayton, Ohio 45479 (US)
(72) Inventor: Collins, Donald Alexander, Jr., Ithaca, New York 14850 (US); Wike, Charles Kenneth, Jr., Ithaca, New York 14850 (US)
(74) Representative: Robinson, Robert George

(56) References cited:
- DE-U- 8 712 320
- US-A- 3 826 900
- US-A- 4 678 288
- US-A- 4 699 447
- US-A- 4 766 299

## Description

This invention relates to hand-held optical bar code readers.

Present checkout systems found in retail or supermarket stores include a point-of-sale terminal positioned adjacent a checkout counter which includes an optical scanning device for scanning a bar code pattern on a label attached to a purchased merchandise item. The scanning device generates signals representing the coded data on the label which are used to generate the price of the purchased item. In some checkout systems, a hand-held bar code reader has been utilized where the purchased merchandise items can be easily handled by the checkout operator so as to position the reader adjacent the bar code label on the purchased merchandise item. To effectively scan a bar code label, prior hand-held bar code readers have required that the operator align the scanning head of the bar code reader with the bar code label (see, for example US-A-4 460 120). This has required the operator to be particularly attentive to the location of the scanning head of the bar code reader with respect to the coded label.

The document US-A-4 766 299 discloses a bar code scanner adapted to be worn on the back of the operator's hand. A switch is attached to the hand strap such that the scanner can be switched on and of by flexing of the user's hand. The scanning beams are directed in a direction generally parallel to the back of the operator's hand so that the fingers are free for use in other operations.

The document DE-U-8 712 320 discloses a hand-held bar code reader which includes a tubular housing having at one end thereof a part-spherically shaped projecting member which carries corresponding part-spherically shaped outer and inner support members. The inner support member supports an illuminating device which includes light sources and light conductive material having angled central edges such that only diffused light reaches the object plane. Light reflected from the object plane passes through a lens to a photodetector.

It is an object of the present invention to provide a hand-held optical bar code reader which enables easy alignment of the scanning head of the reader to bar code indicia being read.

Therefore, according to the present invention, there is provided a hand-held optical scanner for reading coded symbols, as set forth in claim 1.

A further advantage of a hand held optical scanner according to the invention is that it is of compact construction.

One embodiment of the present invention will now be described by way of example, with reference to the accompanying drawings, in which:-
Fig. 1 is a reduced perspective view of the optical bar code reader of the present invention when positioned in the palm of the hand of the checkout operator showing the strap member which secures the bar code reader to the hand of the checkout operator and the trigger mechanism operated by the thumb of the checkout operator for energizing the bar code reader;
Fig. 2 is a side view of the optical bar code reader of the present invention;
Fig. 3 is a reduced rear view of the optical bar code reader of the present invention;
Fig. 4 is a sectional side view of the optical bar code reader of the present invention taken on line 4-4 of Fig. 3;
Fig. 5 is a reduced front view of the optical bar code reader of the present invention;
Fig. 6 is a reduced front view of the optical bar code reader of the present invention with the composite lens member removed showing the location of the loudspeaker, various operating elements of the reader, the laser diode and the photodetector; and
Fig. 7 is a block diagram of the data processing system of the present invention.

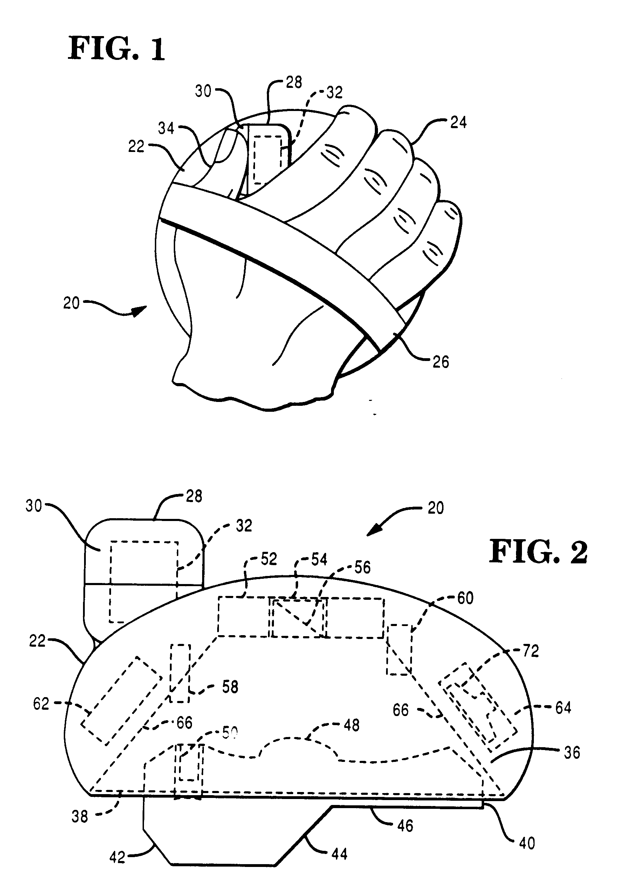

Referring now to Fig. 1, there is shown a reduced perspective view of the optical bar code reader of the present invention generally indicated by the numeral 20 and comprising a disk-shaped casing or housing member 22 having a diameter which is small enough to be placed within the palm of a checkout operator's hand 24 and held there by means of a strap member 26 secured to the housing member 22. The strap member 26 may be fabricated of a velcro material enabling the hand 24 of the checkout operator to be easily released from engagement with the housing member 22. Extending from the outer surface of the housing member 22 is a housing extension portion 28 including a depressible switch member 30 for energizing the operating elements of the bar code reader. Located within the housing portion 28 is a battery 32 which powers the various operating elements of the bar code reader. As shown in Fig. 1, the housing portion 28 is located along the edge of the housing member 22 and positioned to be comfortably engaged by the thumb 34 of the operator for operating the switch member 30.

Referring now to Fig. 2, there is shown a side view of the bar code reader 20 showing the general arrangement of the operating elements of the reader. The housing member 22, which may be constructed of any type of plastic material such as polycarbonate, has a recessed portion 36 which is enclosed by a glass face member 38 on which is mounted a composite lens member 40. The lens member 40 comprises a pair of internal reflecting mirror portions 42 and 44, a collection mirror portion 46, a collimator lens portion 48 and a focusing diode member 50.

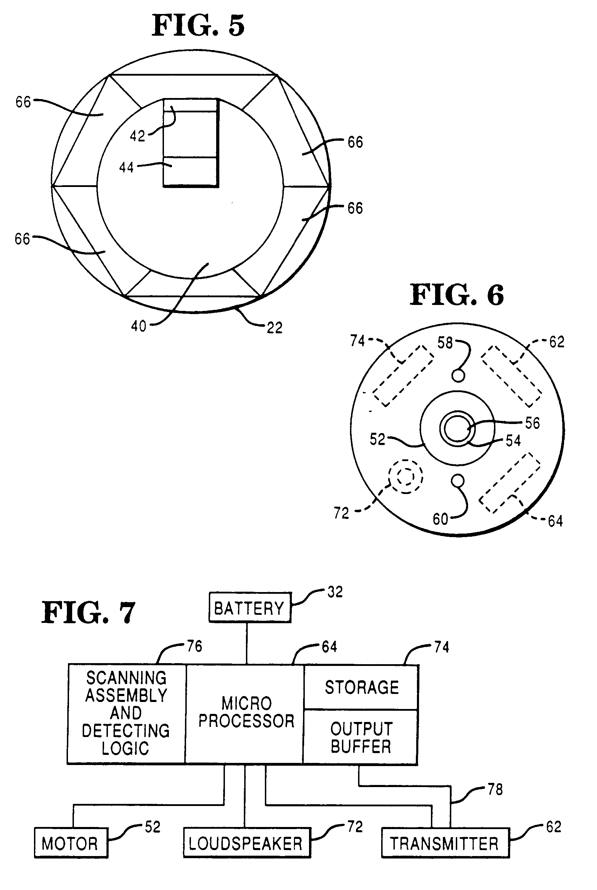

Mounted on the central axis of the housing member 22 is a rotary motor drive member 52 which rotates a hollow armature drive member 54 including a commutator 55. Mounted within the drive member 54 is a deflecting mirror member 56 orientated at any angle to the spin axis of the drive member 52 such as 45 degrees. Mounted within the housing member 22 and adjacent the motor drive member 52 is a laser diode 58 member which generates a laser light beam for transmission to the composite lens member 40. Also positioned adjacent the motor drive member 52 is a photodetector member 60 which receives the deflected light beams from the collection mirror portion 46 of the lens member 40 and generates electrical signals in accordance with the intensity of the light beams received. Also mounted within the housing member adjacent the motor drive member 52 are operating elements of the bar code reader 20 which housing member includes a transmitter member 62 (Figs. 2, 4, 6 and 7) for transmitting signals generated by the photodetector member 60 and a microprocessor member 64 (Figs. 6 and 7) for decoding the signals read by the photodetector member and for controlling the operation of the various elements of the bar code reader. Mounted around the inside periphery of the recessed portion 36 are a plurality of pattern forming mirror members 66 (Figs. 2, 4 and 5) which are mounted offset to each other which reflect and project the light beams received from.the deflecting mirror member 56 towards a bar coded label (not shown) on the purchased merchandise item in a manner to be described more fully hereinafter.

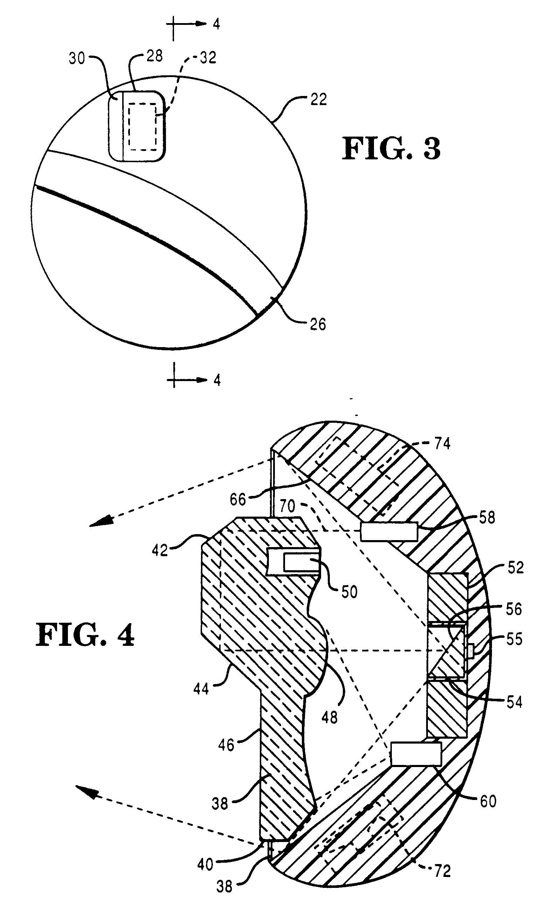

Referring now to Fig. 3, there is shown a reduced rear view of the bar code reader 20 of the present invention which includes the housing portion 28 within which is mounted the depressible switch member 30 and the battery 32. There is also shown in Fig. 3 the location of the strap member 26 which can be mounted to the housing member 22 in any conventional manner.

Referring now to Fig. 4, there is shown a sectional side view of the bar code reader 20 of the present invention taken on line 4-4 of Fig. 3 showing the path of the scanning light beam. The light beam 70 emitted from the laser diode member 58 is projected along a first light path at the reflecting mirror portion 42 of the lens member 40 which reflects the light beam towards the mirror portion 44. The mirror portion 44 will reflect the light beam along a second light path which is parallel to and in an opposite direction to the first light path. The light beam 70 projected along the second light path will be collimated by the collimator lens portion 48 of the lens member 40 and impact on the rotating deflecting mirror member 56 which deflects the light beam outwardly at an acute angle to the second path towards the pattern forming turning mirror members 66. In response to receiving the light beam deflected by the deflecting mirror member 56, the mirror members 66 will direct the light beams in the form of a multiline pattern (not shown) at a target area in which is located the bar coded label (not shown) that is to be scanned. The positioning of the bar code reader 20 with respect to the bar code label is controlled by the diode member 50 which projects a spot of light on the label. The size of the spot projected with respect to the lines of the scanning pattern determines the focal plane of the projected scanning pattern.

The scattered light beams reflected from the scanned bar coded label are redirected back towards the pattern forming mirror members 66 which reflect the light beams at the deflecting mirror member 56 which in turn deflects the light beams to the collection mirror portion 46 of the lens member 40. The light beams collected by the collection mirror portion 46 of the lens member 40 will be focused on the photodetector member 60, resulting in the generation of electrical signals representing the coded data located on the bar coded label. In the present application, there are six pattern forming mirror members 66. The electrical signals generated by the photodetector member 60 are transmitted to the microprocessor member 64 (Figs. 2, 6 and 7) which checks and decodes the electrical signals to determine if a valid read operation has occurred. If it has, the transmitter member 62 is enabled by the microprocessor member to transmit the decoded signals to a remote pickup such as a data terminal device (not shown) for use in obtaining the price of the purchased merchandise item scanned by the bar code reader. As part of this operation, the microprocessor member will enable the loudspeaker member 72 (Figs. 6 and 7) to generate a tone signal indicating whether a good read operation had occurred.

Referring now to Fig. 6, there is shown a reduced front view of the bar code reader 20 of the present invention with the lens member 40 and the glass face member 38 removed showing the location of the motor member 52, the deflecting mirror member 56 and the various operating elements of the bar code reader. Mounted within the housing member 22 are the loudspeaker member 72, the transmitter member 62, the microprocessor member 64 and a storage/buffer member 74 which stores the data to be transmitted by the transmitter member 62. Mounted adjacent the motor member 52 is the laser diode member 58 and the photodetector member 60.

Referring now to Fig. 7, there is shown a block diagram of the data processing system employed in the present invention. Included in the data processing system is a scanning assembly 76 which includes the elements of the bar code reader for generating the scanning pattern and a detecting logic unit which includes the photodetector member 60 for converting the received light beams into electrical signals. Further included in the processing system is the microprocessor member 64 for checking and decoding the signals read by the detecting logic unit and for generating control signals for operating the transmitter member 62 and the loudspeaker member 72 indicating the validity of a scanning operation by the scanning assembly as previously described. Also included in the data processing system is the conventional storage/buffer member 74 for outputting the data signals read by the detecting logic unit of the scanning assembly 76 over line 78 to the transmitter member 62 under the control of the microprocessor member 64, the transmitter member transmitting the data signals to a remote pickup unit (not shown). The microprocessor member 64 is also connected to the battery 32 and the motor member 52 for controlling their operation.

It will be seen that the portable bar code reader of the present invention is easier to use than hand-held scanners of the prior art since the multiple line scanning pattern generated by the present invention covers a wider area as compared to the single line scan pattern generated by prior hand-held scanner allowing the reader to be properly positioned adjacent the coded label. Due to its compact construction and its positioning within the palm of the hand, the bar code reader can be easily moved across the coded label.

In a modification, the on/off switch may be mounted along the perimeter of the reader for actuation by the tip of the operator's finger.

## Claims

1. A hand-held optical scanner for reading coded symbols, including a disk-shaped housing member (22); light projecting means (42,44,56,66) mounted within the housing member (22) for projecting scanning light beams at coded symbols positioned adjacent the housing member (22); securing means (26) secured to the housing member (22) for securing the housing member (22) to the hand of the operator; and switch means (30) mounted adjacent the hand of the operator when the hand is engaged by said securing means for enabling the optical scanner to be operated when actuated, characterized in that said housing member (22) includes a curved outer surface adapted to be positioned within the palm of the hand of the operator; in that said light projecting means (42,44,56,66) are arranged to project said scanning light beams in a direction generally perpendicular to said curved outer surface; in that said securing means (26) is adapted to maintain said optical scanner in the palm of the hand of the operator; and in that said switch means (30) is mounted on an extension portion extending outwardly from said curved outer surface of said housing member (22).

2. An optical scanner according to, claim 1, characterized in that said light projecting means includes; a source (58) of a scanning light beam mounted in said housing member (22) for projecting the light beam along a first path; an optical member (40) mounted in said housing member and in said first path for deflecting the light beam along a second path which is opposite in direction to said first path; drive means (52) mounted in said housing member (22) and in said second path including support means (54) adapted for rotation by operation of said drive means; deflecting means (56) mounted on said support means (54) and positioned in said second path for deflecting the light beam along a plurality of third paths which extend at an acute angle to said second path; and reflecting means (66) mounted in said housing member and in said third paths for reflecting the light beams in a scanning direction to form a scanning pattern for scanning the coded symbols.

3. An optical scanner according to claim 2, characterized by a detector member (60) mounted in said housing member (22) adjacent said drive means (52) for generating electrical signals in response to receiving light beams of varying intensity, said optical member (40) including collecting means (46) for collecting the light beams reflected from the scanned coded symbols and for focusing the reflected light beams on the detector member (60).

4. An optical scanner according to claim 3, characterized by processing means (64) mounted in said housing member (22) for decoding the electrical signals generated by said detector member (60) and for verifying the validity of the reading of the coded symbols.

5. An optical scanner according to claim 4, characterized by transmitter means (62) mounted in said housing member (22) and coupled to said processing means (64) for transmitting the signals decoded by the processing means (64) to a remote pickup in response to the processing means (64) verifying the validity of the reading of the coded symbols.

6. An optical scanner according to claim 5, characterized by a loudspeaker (72) mounted in said housing member (22) and coupled to said processing means (64) for generating a tone signal indicating the occurrence of a valid read operation in response to the processing means (64) verifying the validity of the reading of the coded symbols.

7. An optical scanner according to claim 1, characterized in that said housing member (22) includes a housing extension (28) protruding from an outside surface of the housing member (22), said switch means (30) being slidably mounted within the housing extension for actuation by the hand of the checkout operator when positioned adjacent the housing extension (28).

8. An optical scanner according to claim 7, characterized by a power source (32) mounted in said housing extension (28) and enabled by the actuation of said switch means (30) to operate said scanner.

9. An optical scanner according to claim 6, characterized by storage means (74) mounted in said housing member and connected to said processing means (64) and said transmitter means (62) for temporarily storing the decoded data outputted by the processing means (64) which data is to be transmitted to the transmitter means (62) for transmission to the remote pickup.

## Patentansprüche

1. Ein handgeführter optischer Abtaster zum Lesen kodierter Symbole, umfassend ein scheibenförmiges Gehäuse (22);
Lichtprojektionsmittel (42, 44, 56, 66), die in dem Gehäuse (22) befestigt sind, um abtastende Lichtstrahlen auf kodierte, in Nähe des Gehäuses (22) vorgesehene Symbole zu projizieren; ein Befestigungsmittel (26), das an dem Gehäuse (22) befestigt ist, um das Gehäuse (22) an der Hand der Bedienperson zu befestigen; und ein Schaltmittel (30), das benachbart zur Hand der Bedienperson befestigt ist, wenn die Hand im Eingriff mit dem Befestigungsmittel ist, um dem optischen Abtaster zu ermöglichen, bei Betätigung betrieben zu werden,
dadurch gekennzeichnet,
daß das Gehäuse (22) eine gewölbte Außenfläche aufweist, die angepaßt ist, um in der Handfläche der Hand der Bedienperson angeordnet zu sein;
daß die Lichtprojektionsmittel (42, 44, 56, 66) angeordnet sind, um die abtastenden Lichtstrahlen in einer Richtung im allgemeinen senkrecht zu der gewölbten Außenfläche zu projizieren;
daß das Befestigungsmittel (26) angepaßt ist, den optischen Abtaster in der Handfläche der Hand der Bedienperson zu halten; und daß das Schaltmittel (30) auf einem Erweiterungsteil befestigt ist, das sich von der gewölbten Außenfläche des Gehäuses (22) nach außen erstreckt.

2. Ein optischer Abtaster nach Anspruch 1, dadurch gekennzeichnet, daß das Lichtprojektionsmittel umfaßt: eine in dem Gehäuse (22) befestigte Abtastlichtstrahlquelle (58), um den Lichtstrahl entlang eines ersten Pfades zu projizieren; ein optisches Element (40), das in dem Gehäuse in dem ersten Pfad befestigt ist, um den Lichtstrahl entlang einem zweiten Pfad abzulenken, welcher entgegen der Richtung des ersten Pfades ist; ein Antriebsmittel (52), das in dem Gehäuse (22) in dem zweiten Pfad befestigt ist und ein Stützmittel (54) aufweist, das zum Drehen durch Betreiben des Antriebsmittels ausgelegt ist; ein Ablenkmittel (56), das auf dem Stützmittel (54) befestigt und in dem zweiten Pfad angeordnet ist, um den Lichtstrahl entlang einer Vielzahl dritter Pfade abzulenken, welche sich in einem spitzen Winkel zu dem zweiten Pfad erstrecken; und Reflexionsmittel (66), die in dem Gehäuse in den dritten Pfaden befestigt sind, um die Lichtstrahlen in eine Abtastrichtung zu reflektieren, um ein Abtastmuster für das Abtasten der kodierten Symbole zu bilden.

3. Ein optischer Abtaster nach Anspruch 2, gekennzeichnet durch ein Detektorelement (60), das in dem Gehäuse (22) benachbart zu dem Antriebsmittel (52) befestigt ist, um elektrische Signale in Folge auf empfangene Lichtstrahlen unterschiedlicher Intensität zu erzeugen, wobei das optische Element (40) ein Bündelungsmittel (46) aufweist, um die Lichtstrahlen zu bündeln, die von den abgetasteten kodierten Symbolen reflektiert wurden und um die reflektierten Lichtstrahlen auf das Detektorelement (60) zu fokussieren.

4. Ein optischer Abtaster nach Anspruch 3, gekennzeichnet durch ein Verarbeitungsmittel (64), das in dem Gehäuse (22) befestigt ist, um die durch das Detektorelement (60) erzeugten elektrischen Signale zu dekodieren und zum Überprüfen der Gültigkeit der Ablesung von den kodierten Symbolen.

5. Ein optischer Abtaster nach Anspruch 4, gekennzeichnet durch ein Übertragungsmittel (62), das in dem Gehäuse (22) befestigt ist und an das Verarbeitungsmittel (64) angeschlossen ist, um die durch das Verarbeitungsmittel (64) dekodierten Signale auf einen entfernten Aufnehmer in Ansprechen auf das Verarbeitungsmittel (64) zu übertragen, das die Gültigkeit der Ablesung von den kodierten Symbolen überprüft.

6. Ein optischer Abtaster nach Anspruch 5, gekennzeichnet durch einen Lautsprecher (72), der in dem Gehäuse (22) befestigt ist und an das Verarbeitungsmittel (64) angeschlossen ist, um ein akustisches Signal zu erzeugen, das das Auftreten eines gültigen Lesevorgangs in Ansprechen auf das Verarbeitungsmittel (64) anzeigt, das die Gültigkeit der Ablesung von den kodierten Symbolen überprüft.

7. Ein optischer Abtaster nach Anspruch 1, dadurch gekennzeichnet, daß das Gehäuse (22) eine Gehäuseerweiterung (28) aufweist, die aus einer Außenfläche des Gehäuses (22) hervortritt, wobei das Schaltmittel (30) zum Betätigen durch die Hand der Abfertigungsbedienperson, wenn sie sich nahe an der Gehäuseerweiterung (28) befindet, verschiebbar in der Gehäuseerweiterung befestigt ist.

8. Ein optischer Abtaster nach Anspruch 7, gekennzeichnet durch eine Energieversorgung (32), die in der Gehäuseerweiterung (28) befestigt ist und durch die Betätigung des Schaltmittels (30) befähigt wird, den Abtaster zu betreiben.

9. Ein optischer Abtaster nach Anspruch 6, gekennzeichnet durch Speichermittel (74), die in dem Gehäuse befestigt und an das Verarbeitungsmittel (64) und das Übertragungsmittel (62) angeschlossen sind, um die von dem Verarbeitungsmittel (64) abgegebenen, dekodierten Daten zeitweilig zu speichern, welche an das Übertragungsmittel (62) zur Übertragung an den entfernten Aufnehmer übertragen werden.

## Revendications

1. Un dispositif de balayage optique portable pour lire les symboles codés, comportant un élément logement en forme de disque (22); des moyens de projection de lumière (42, 44, 56, 66) montés dans l'élément logement (22) pour projeter des faisceaux lumineux de balayage vers des symboles codés positionnés au droit de l'élément logement (22); un moyen de fixation (26) fixé à l'élément logement (22) pour fixer l'élément logement (22) à la main de la préposée; et un moyen commutateur (30) monté au droit de la main de la préposée lorsque la main est engagée par ledit moyen de fixation pour permettre au dispositif de balayage optique d'être actionné lorsqu'il est activé, caractérisé en ce que ledit élément logement (22) comporte une surface extérieure courbée adaptée pour être positionnée dans la paume de la main de la préposée; en ce que lesdits moyens de projection de lumière (42, 44, 56, 66) sont arrangés pour projeter lesdits faisceaux lumineux de balayage dans un sens généralement perpendiculaire à ladite surface extérieure courbée; en ce que ledit moyen de fixation (26) est adapté pour maintenir ledit dispositif de balayage optique dans la paume de la main de la préposée; et en ce que ledit moyen commutateur (30) est monté sur une partie extension s'étendant vers l'extérieur à partir de ladite surface extérieure courbée dudit élément logement (22).

2. Un dispositif de balayage optique conformément à la revendication 1, caractérisé en ce que lesdits moyens de projection de lumière comportent: une source (58) d'un faisceau lumineux de balayage montée dans ledit élément logement (22) pour projeter le faisceau lumineux le long d'un premier trajet; un élément optique (40) monté dans ledit élément logement et dans ledit premier trajet pour faire dévier le faisceau lumineux le long d'un deuxième trajet et dont le sens est contraire à celui dudit premier trajet; un moyen d'entraînement (52) monté dans ledit élément logement (22) et dans ledit deuxième trajet comportant un moyen de support (54) adapté pour rotation par l'actionnement dudit moyen d'entraînement; un moyen de déviation (56) monté sur ledit moyen de support (54) et positionné dans ledit deuxième trajet pour faire dévier le faisceau lumineux le long d'une pluralité de troisièmes trajets qui s'étendent à un angle aigu par rapport audit deuxième trajet; et un moyen réflecteur (66) monté dans ledit élément logement et dans lesdits troisièmes trajets pour réfléchir les faisceaux lumineux dans un sens de balayage pour former un dessin de balayage pour balayer les symboles codés.

3. Un dispositif de balayage optique conformément à la revendication 2, caractérisé par un élément détecteur (60) monté dans ledit élément logement (22) au droit dudit moyen d'entraînement (52) pour générer des signaux électriques en réponse à la réception de faisceaux lumineux d'intensité variable, ledit élément optique (40) comportant un moyen de captage (46) pour capter les faisceaux lumineux réfléchis à partir des symboles codés balayés et pour faire converger les faisceaux lumineux réfléchis sur l'élément détecteur (60).

4. Un dispositif de balayage optique conformément à la revendication 3, caractérisé par un moyen de traitement (64) monté dans ledit élément logement (22) pour décoder les signaux électriques générés par ledit élément détecteur (60) et pour vérifier la validité de la lecture des symboles codés.

5. Un dispositif de balayage optique conformément à la revendication 4, caractérisé par un moyen transmetteur (62) monté dans ledit élément logement (22) et accouplé audit moyen de traitement (64) pour transmettre les signaux décodés par le moyen de traitement (64) vers un capteur éloigné en réponse à la vérification par le moyen de traitement (64) de la validité de la lecture des symboles codés.

6. Un dispositif de balayage optique conformément à la revendication 5, caractérisé par une enceinte acoustique (72) montée dans ledit élément logement (22) et accouplée audit moyen de traitement (64) pour générer une tonalité indiquant qu'il s'est produit une opération de lecture valide en réponse à la vérification par le moyen de traitement (64) de la validité de la lecture des symboles codés.

7. Un dispositif de balayage optique conformément à la revendication 1, caractérisé en ce que ledit élément logement (22) comporte une extension de logement (28) dépassant d'une surface extérieure de l'élément logement (22), ledit moyen commutateur (30) étant monté de façon à pouvoir glisser dans l'extension de logement pour actionnement par la main de la préposée à la caisse lorsqu'il est positionné au droit de l'extension de logement (28).

8. Un dispositif de balayage optique conformément à la revendication 7, caractérisé par une source de puissance (32) montée dans ladite extension de logement (28) et validée par l'actionnement dudit moyen commutateur (30) pour commander ledit dispositif de balayage.

9. Un dispositif de balayage optique conformément à la revendication 6, caractérisé par un moyen de mémorisation (74) monté dans ledit élément logement et connecté audit moyen de traitement (64) et audit moyen transmetteur (62) pour mémoriser temporairement les données décodées sorties par le moyen de traitement (64), ces données devant être transmises au moyen transmetteur (62) pour transmission au capteur éloigné.
